(19)

Europäisches
Patentamt
European
Patent Office
Office européen
des brevets

(11)  **EP 1 631 600 B1**

(12)  **EUROPEAN PATENT SPECIFICATION**

(45) Date of publication and mention
of the grant of the patent:
**12.11.2008 Bulletin 2008/46**

(51) Int Cl.:
***C08F 10/00*** (2006.01)   ***C08F 4/626*** (2006.01)
***C08F 4/68*** (2006.01)

(21) Application number: **04751994.7**

(22) Date of filing: **12.05.2004**

(86) International application number:
**PCT/US2004/014850**

(87) International publication number:
**WO 2005/000919 (06.01.2005 Gazette 2005/01)**

(54) **POLYOLEFINS WITH HIGH LEVELS OF LONG CHAIN BRANCHING**

POLYOLEFINE MIT HOHEM ANTEIL AN LANGKETTIGEN VERZWEIGUNGEN

POLYOLÉFINES PRÉSENTANT DES TAUX ÉLEVÉS DE RAMIFICATIONS À CHAÎNES LONGUES

(84) Designated Contracting States:
**AT BE BG CH CY CZ DE DK EE ES FI FR GB GR
HU IE IT LI LU MC NL PL PT RO SE SI SK TR**

(30) Priority: **09.06.2003 US 457769**

(43) Date of publication of application:
**08.03.2006 Bulletin 2006/10**

(73) Proprietor: **Equistar Chemicals, LP
Houston, TX 77010 (US)**

(72) Inventors:
  • **LYNCH, Michael, W.
West Chester, OH 45069 (US)**
  • **SHANKERNARAYANAN, Manivakkam, J.
Cincinnati, OH 45249 (US)**

(74) Representative: **Nederlof, Etienne C. et al
Octrooibureau Vriesendorp & Gaade B.V.,
Postbus 266
2501 AW Den Haag (NL)**

(56) References cited:
  **US-A- 5 534 472        US-A- 5 670 439**

  • SHROFF R N ET AL: "Long-chain-branching
index for essentially linear polyethylenes"
MACROMOLECULES; MACROMOLECULES
1999 ACS, WASHINGTON, DC, USA, vol. 32, no.
25, 1999, pages 8454-8464, XP002298738 cited in
the application
  • M. K. REINKING, G. ORF, D. MAFADDIN: "Novel
mechanism for the formation of long-chain
Branching in Polyethylene" JOURNAL OF
POLYMER SCIENCE A POLYMER CHEMISTRY,
vol. 36, 30 November 1998 (1998-11-30), pages
2889-2898, XP002298739
  • SUKAHIDA: "The Effects of Long chain branching
on the processing-structure -Property behavior
of Polyethylene Blon Film Resins" 2 August 2002
(2002-08-02), SOCIETY OF PLASTICS
ENGINEERS , XP002298740 page 292, last
paragraph

EP 1 631 600 B1

Printed by Jouve, 75001 PARIS (FR)

**Description**

BACKGROUND OF THE INVENTION

FIELD OF THE INVENTION

The present invention is related to methods of making polyolefin resins having densities greater than 0.92 g/cm$^3$ and high levels of long chain branching.

BACKGROUND ART

Polyolefins, and in particular polyethylene, are important thermoplastic resins used in a multitude of applications. Polyethylene is perhaps the best known and most widely used thermoplastic in the world. A molecule of polyethylene consists of a long chain of -CH2- groups. There are several different types of polyethylene each having different properties -- Low Density Polyethylene ("LDPE"), Linear Low Density Polyethylene ("LLDPE"), Medium Density Polyethylene ("MDPE"), and High Density Polyethylene ("HDPE"). The various types of polyethylene characteristically differ in density. LDPE has a relatively low density from about 0.91 to 0.925 grams/cm$^3$; LLDPE has a low relative density: 0.91 to 0.925 grams/cm$^3$; MDPE has a density for about 0.926 to 0.94 grams/cm$^3$; and HDPE has a density from about 0.941 to 0.965 grams/cm$^3$. Both HDPE and LLDPE tend to have superior mechanical properties to LDPE. However, HDPE tends to tear more easily than LDPE.

LDPE is characterized by having a branched structure that contains long chain branches. This branched structure gives LDPE several useful properties which include for example transparency, low density, and flexibility. A second important advantage of long chain branching is that such branching improves melt strength and facilitates processing. Moreover LDPE is useful in extrusion and rotational molding processes. LDPE finds application in forming plastic bags, bottles, and in electrical applications. However, LDPE resins are typically made by an expensive high pressure (1.41 kg/cm$^2$ - 2109 kg/cm$^2$ (20 to 30,000 psig)) process.

Linear Low Density Polyethylene ("LLDPE") is another type of polyethylene which differs from LDPE in several characteristics. The usual type of LLDPE usually does not contain significant amounts of long chain branching instead, LLDPE usually has only short chain branching. Short chain branching ("SCB") is defined as a short chain coming off the main polymer backbone having a length of two carbons less than the length of the comonomer. Long chain branching ("LCB") refers to much longer chains coming off of the polymer backbone comprising a significant number of monomer units. Moreover, a significant difference between LLDPE and HDPE is that the lower amounts of short chain branches in HDPE results in higher density material. The differing linearity of LLDPE results from the different manufacturing processes of LLDPE and LDPE. LLDPE is typically produced at much lower temperatures and pressures, by co-polymerization of ethylene with butene, hexene or octene. The co-polymerization process produces a polymer that has a narrower molecular weight distribution than LDPE and significantly different rheological properties. The molecular weight distribution in LLDPE has significant effect on such properties as chemical resistance, permeability, tensile strength, stiffness, and environment stress-crack resistance. The density of LLDPE is determined by the concentration of the co-monomer in the polyethylene chain. The higher the co-monomer concentration, the lower the density of the resin.

Although many variations of polyolefins, and in particular polyethylene are known, currently there are few if any polyolefins that achieve even moderately high densities (i.e., greater than about 0.92) with high values of the long chain branching index (1 to 6.)

SUMMARY OF THE INVENTION

The present invention relates to a method of forming a polyolefin resin with a relatively high density and a long chain branch ("LCB") index greater than about 1. The method of the invention comprises forming a reaction mixture at a sufficient temperature to allow formation of the polyolefin resin by combining molecular hydrogen, a first olefin selected from the group consisting of ethylene and C$_3$-C$_8$ $\alpha$-olefin, an optional second olefin which is different than the first olefin selected from the group consisting of ethylene and C$_3$-C$_8$ $\alpha$-olefin, a diluent; and a catalyst system that forms long chain branches on a polymer backbone and initiating polymerization of the reaction mixture. The resulting polyolefin resin has a density greater than about 0.92, a melt index from about 0.01 to about 20, and a long chain branching index greater than about 1. The preferred catalyst system is disclosed in U.S. Patent No. 5,534,472.

DETAILED DESCRIPTION OF THE PREFERRED EMBODIMENT(S)

Reference will now be made in detail to presently preferred compositions or embodiments and methods of the invention, which constitute the best modes of practicing the invention presently known to the inventors.

The polyolefin resins produced by the method of the present invention advantageously have high values of the long chain branching index ("LCBI"). The derivation of the long chain branching index is discussed in the article Long-Chain-Branching Index for Essentially Linear Polyethylenes, R.N. Shroff and H. Mavridis, Marcomolecules, vol. 32, no. 25, p. 8454-8464, (1999). The long chain branching index is related to the viscosity enhancement from long chain branching. It is independent of molecular weight and molecular weight distribution. The long chain branching index is given by:

$$LCBI = (\eta_0^{0.179}/(4.8[\eta])) - 1$$

where $\eta_0$ is the shear viscosity at 1,90°C and $[\eta]$ is the intrinsic viscosity in trichlorobenzene at 135°C.

The first olefin and the second olefin are each selected from the group consisting of ethylene, propylene, 1-butene, 1-pentene, 4-methyl-1-pentene, 1-hexene, 1-octane, and mixtures thereof with the proviso that the first olefin and the second olefin are different. Preferably, the first olefin is ethylene. Typically, the molar ratio of the first olefin to the second olefin is from about 0.001 to about 1,000 in the reaction mixture. Moreover, the first olefin is present in an amount of about 0.2 mole % to about 20 mole % of the reaction mixture and the second olefin is present in an amount of about 0.1 mole % to about 30 mole% of the reaction mixture: Furthermore, the polymerization may include molecular hydrogen in an amount of about 0.00005 mole % to about 5 mole % of the reaction mixture. In a first variation of this embodiment, the first olefin is present in an amount of about 5 mole % to about 15 mole % of the reaction mixture and the second olefin is present in an amount of about 0.5 mole % to about 5 mole% of the reaction mixture. In this first variation, first olefin is ethylene, the second olefin is selected from the group consisting of ethylene, propylene, 1-butene, 1-pentene, 4-methyl-1-pentene, 1-hexene, 1-octene, and mixtures thereof, and the polyolefin resin is a HDPE. In a second variation of this embodiment, the first olefin is present in an amount of about 5 mole % to about 15 mole % of the reaction mixture and the second olefin is present in an amount of about 5 mole % to about 30 mole % of the reaction mixtures. In this second variation, the first olefin is ethylene, the second olefin is selected from the group consisting of ethylene, propylene, 1-butene, 1-pentene, 4-methyl-1-pentene, 1-hexene, 1-octene, and mixtures thereof, and the polyolefin resin is a LDPE.

According to the present invention the method of forming a polyolefins resin comprises:

a) forming a reaction mixture at a sufficient temperature to allow formation of the polyolefin resin by combining molecular hydrogen, a first olefin selected from the group consisting of ethylene and $C_3$-$C_8$ $\alpha$-olefin, an optional second olefin selected from the group consisting of ethylene and $C_3$-$C_8$ $\alpha$-olefin, a diluent, and a catalyst system; and
b) initiating polymerization of the reaction mixture;

wherein the first olefin is different than the second olefin and the polyolefin resin has a density greater than about 0.92, a melt index from about 0.01 to about 20, and a long chain branching index of greater than about 1. Typically, the reaction temperature will be from about 60°C to about 90°C. The method of this embodiment is preferably carried out at pressure less than about 70.3 kg/cm$^2$ (1000 psig). The preferred catalyst system does not contain chromium. The phrase "does not contain chromium" in this context means that chromium is present at most as impurities or in a trace amount. Moreover, the preferred catalyst system is a vanadium-containing catalyst system. The most preferred catalyst systems are those disclosed in U.S. Patent No. 5,534,472, the entire disclosure of which is hereby incorporated by reference. Although not limiting the present invention to any particular mechanism, it is believed that the polymers made by the method of the invention have long chain branched by the activation of C-H bonds in the polymer backbone through a $\sigma$- bond metathesis reaction followed by insert of an ethylene or an $\alpha$-olefin. The most preferred catalyst system comprises:

(A) a supported catalyst component prepared by the steps of

(i) preheating silica at a temperature in the range of between about 150 °C and about 800 °C;
(ii) contacting said preheated silica with a contacting agent selected from the group consisting of (1) a compound or complex which includes at least one carbon to magnesium covalent bond, (2) a compound which includes at least one carbon to a metal of Group III of the Periodic Table of the Elements covalent bond and (3) both a compound or complex which includes at least one carbon to magnesium covalent bond and a compound which includes at least one carbon to Group III metal covalent bond;
(iii) contacting said product of step (ii) with whichever of contacting agent (1) and (2) that does not contact said preheated silica in step (b), with the proviso that this step is omitted if said contacting agent (3) is employed in step (b);
(iv) contacting said product of step (ii) or (iii) with a vanadium compound which includes at least one halogen atom; and

(v) contacting said product of step (iv) with an alcohol;

(B) an organoaluminum compound cocatalyst; and

(C) a halogen containing promoter compound having the structural formula $C_tH_sX^2_{2t+2-s}$ where $X^2$ is the same or different and is fluorine, chlorine or bromine; t is an integer of 1 to 3 and s is 0 or an integer of 1 to 7.

The first olefin is different than the second olefin. Moreover, the amount of the second olefin is somewhat important in determining the properties of the polyolefin resin formed by the method of the invention. The resulting polyolefin resin has a density greater than about 0.92, a melt index from about 0.01 to about 20, and a long chain branching index of greater than about 1. In one variation of this embodiment, the melt index is from about 0.1 to 10. In another variation of this embodiment, the chain branching index is from about 1 to 6. In still another variation of this embodiment, the chain branching index is from about 2 to 3.

A number of different $\alpha$-olefins may be used in practicing the invention. For example, first olefin and the second olefin are each selected from the group consisting of ethylene, propylene, 1-butene, 1-pentene, 4-methyl-1-pentene, 1-hexene, 1-octene, and mixtures thereof. Preferably, the first olefin is ethylene and the second olefin is 1-butene, 1-hexene, or mixtures thereof. The molar ratio of the first olefin to the second olefin is preferably from about 0.001 to about 1,000. Moreover, the first olefin is present in an amount of about 0.2 mole % to about 20 mole % of the reaction mixture and the second olefin is present in an amount of about 0.1 mole % to about 30 mole% of the reaction mixture.

In a first variation of this embodiment of the present invention when the most preferred vanadium-containing catalyst system is used, the first olefin is present in an amount of about 5 mole % to about 15 mole % of the reaction mixture and the second olefin is present in an amount of about 0.5 mole % to about 5 mole% of the reaction mixture. In this variation, when the first the first olefin is ethylene, the polyolefin formed by the method of the invention will be a HDPE. In another variation of this embodiment when the most preferred vanadium-containing catalyst system is used, the first olefin is present in an amount of about 5 mole % to about 15 mole % of the reaction mixture and the second olefin is present in an amount of about 5 mole % to about 30 mole % of the reaction mixture. In this variation, when the first olefin is ethylene, the polyolefin resin formed by the method of the invention is a LLDPE.

The reaction mixture used in the method of the invention also includes molecular hydrogen preferably in an amount from about 0.00005 to about 5 mole %. The amount of hydrogen will most significantly affect the molecular weight of the polyolefin resins formed by the invention. For example, low molar percentages of hydrogen from about 0.00005 to 0.5 mole % will tend to form high molecular weight polymers. More preferably about 0.01 mole % hydrogen of the reaction mixture is used to produce high molecular weight resins. When a low molecular weight resin is desired, hydrogen is present from about 0.5 mole % to about 5 mole %. More preferably, the hydrogen will be present in an amount from about 1 mole % to about 3 mole % is a low molecular weight resin is desired.

The vanadium-containing catalyst system of the present invention includes an organoaluminum compound cocatalyst. The vanadium-containing catalyst systems also includes a promoter which improves the activity of the catalyst while also possibly modifying the molecular weight distribution. Finally, the vanadium-containing catalyst systems optionally includes a modifier having formula I:

$$(R^1O)_xSiR^2_{4-x} \qquad I$$

where $R^1$ and $R^2$ are each independently alkyl and x is 1 to 3. The modifier is useful in tailor the molecular weight distribution and long chain branching of the polyolefins resins of the present invention. The modifier is added at any point during the formation of the polyolefin resin. Suitable modifiers include for example $(i\text{-propyl})_2Si(OMe)_2$, $(i\text{-butyl})_2Si(OMe)_2$, $Me_2Si(OMe)_2$, $(i\text{-butyl})Si(OMe)_3$, $(cyclohexyl)(Me)Si(OMe)_2$, and the like.

The method by which the polymerization that occurs in the method of the invention is initiated merits some discussion. The polymerization may be carried out in a continuous or batch-wise reactor system. Typically, the reaction mixture is formed by charging a reaction vessel with the diluent, molecular hydrogen, and optionally one or both of the first olefin and the second olefin. The exact order with which these components are added is not very critical. Polymerization may be initiated by introducing the catalyst system into the reaction vessel followed by addition of the first olefin and the second olefin if either has not already been added. In a variation of this polymerization initiation, the organoaluminum compound cocatalyst, the modifier, and the halogen-containing promoter are also added to the reaction mixture prior to initiation by the supported catalyst component.

In yet another embodiment of the invention, a method of forming a polyolefin resin is provided. Moreover, the method of this embodiment can be separated into two discrete parts making it suitable to be carried out in a cascading reactor system having at least two zones or reaction chambers. A two reactor system will typically have a conduit connecting the reactor so that the contents of on reactor can be transferred to the second reactor. The specific temperatures and concentrations of olefins and $H_2$ used in each reactor are chosen to produce the desired molecular weight, density, and long chain branching index of the polymers. The first part of this method which may be carried out is a first zone or reactor comprises forming a reaction mixture at a sufficient temperature to allow formation of the polyolefin resin by combining molecular hydrogen, a first olefin selected from the group consisting of ethylene and a $C_3$-$C_8$ $\alpha$-olefin, an optional diluent, a second olefin selected from the group consisting of ethylene and a $C_3$-$C_8$ $\alpha$-olefin, an optional diluent; and a catalyst system that forms long chain branches on a polymer backbone. The first olefin is different than the second olefin. The method of this embodiment is preferably carried out at pressure less than about 70.3 kg/cm$^2$ (1000 psig). The preferred catalyst systems are the same as set forth above. Similarly, the selection of the first olefin and the vanadium containing catalyst system is the same as set forth above. At this point, one or more of the first olefin, the second olefin, molecular hydrogen, and the diluent may be optionally removed. If a two reactor system is used, these compound may be removed in a flash vessel that connects the two reactors. In the second part of this method which can be performed in a second zone or reactor, a second olefin selected from the group consisting of ethylene and $C_3$-$C_8$ $\alpha$-olefin is added to the reaction mixture. Additional amounts of the first olefin and molecular hydrogen are added to the reaction mixture if needed. Furthermore, additional amounts of the second olefin and the diluent may also be optionally added. Finally, additional cocatalyst or promoter may also be added at this point. The modifier may be introduced at any step in the method, however, it is preferably introduced along with the additional amounts of the first olefin and molecular hydrogen. The introduction of the second olefin and the additional amounts of the first olefin may be formed in any order or even simultaneously. The introduction of these olefins causes additional polymerization to occur. Moreover, the resulting polyolefin resin has a density greater than about 0.92, a melt index from about 0.01 to about 20, and a long chain branching index greater than about 1. In one variation of this embodiment, the melt index is from about 0.1 to 10. In another variation of this embodiment, the chain branching index is from about 1 to 6. In still another variation of this embodiment, the chain branching index is from about 2 to 3. In this second embodiment, the first olefin and the second olefin will be the same as set forth above with the same mole ratios as set forth above. Similarly, the amounts of the first and second olefins will be the same as set forth above with the proviso that the amounts of each refers to the total amounts added for all the steps of this embodiment.

In a still another embodiment of the present invention, a method of forming a polyethylene resin is provided. The method of this embodiment comprises forming a reaction mixture by combining molecular hydrogen, ethylene, a $C_3$-$C_8$ $\alpha$-olefin selected from the group consisting of propylene, 1-butene, 1-pentene, 4-methyl-1-pentene, 1-hexene, 1-octene, and mixtures thereof, a diluent, and a vanadium-containing catalyst system at a sufficient temperature to allow formation of the polyolefin resin. The vanadium-containing catalyst is the same as set forth above. The molar ratio of the ethylene to the $C_3$-$C_8$ $\alpha$-olefin is from about 0.001 to about 1,000, the molecular hydrogen is present in amount from about 0.00005 to about 5 mole %, and the polyolefin resin has a density greater than about 0.92, a melt index from about 0.01 to about 20, and a long chain branching index greater than about 1. In one variation of this embodiment, the melt index is from about 0.1 to 10. In another variation of this embodiment, the chain branching index is from about 1 to 6. In still another variation of this embodiment, the chain branching index is from about 2 to 3.

The following examples illustrate the various embodiments of the present invention. Those skilled in the art will recognize many variations that are within the spirit of the present invention and scope of the claims.

POLYMERIZATION PROCEDURES

The catalyst systems of U.S. Patent No. 5,534,472 as set forth above are used in the following experiments. The cocatalyst in these experiments is Al(Et)$_3$ ("TEAL") and the promoter is CH$_2$Br$_2$ ("DBM"). All polymerizations are carried out in a 1 gallon polymerization vessel operating in a semi batch mode. The reactor is fitted with temperature control, pressure control and equipment to introduce, diluents such as isobutane or hexane, molecular hydrogen, monomers such as 1 hexene or 1 butene, catalyst, cocatalyst, and promoter. An ethylene mass flow meter is used to monitor the ethylene consumed during the polymerization, ethylene is added continuously during the run to main a constant concentration. All other ingredients are added at the beginning of the run.

1. Single reactor HDPE Experiments

The N$_2$ purged reactor is sealed and then the following are added as follows. H$_2$ as an amount from a 500 ml vessel and added to the reactor as a pressure drop to control the MI to the desired level. Typically from 0.70 kg/cm$^2$ (10 psi) to 52.7 kg/cm$^2$ (750 psi) pressure drop. 1600 ml of isobutane as the diluent. The stirrer is turned on and the temperature control set to 80 °C. Optionally, a quantity of 1 hexene or 1 butene is added to produce the target density (for higher density typically 10 - 100 mls) The catalyst, cocatalyst, and modifier are added to a 3 legged injector device in an inert atmosphere glove box. The injector is connected to the reactor through a quick connect to avoid contamination with water and oxygen. A high pressure N2 line is connected to aid in adding the materials. The cocatalyst TEAL typically 1 2 mls of a ~ 1.5M solution in heptane is injected into the reactor. Then DBM solution typically 1 6 mls of a 1 M of DBM solution in heptane are added. The ethylene is then added to the reactor to ~ 0.35 kg/cm$^2$ (5 psi) pressure below the desired run pressure as the reactor stabilizes at run temperature.

The catalyst typically 0.1 to 0.5 grams is injected to initiate the run. As soon as the catalyst is injected the run time is started and the ethylene is turned on. Typical runs may produce 100-300 grams of polymer. To minimize the impact of $H_2$ or comonomer concentration changes during the runs each run is targeted to make ~100 grams of polymer. When the ethylene totalizer indicates ~100 grams of polymer are made the run is terminated by turning off the ethylene supply and dumping the reactor contents through a bottom dump valve into a receiving vessel. The volatile reactants are vaporized through a suitable vent stack to the atmosphere.

2. Single reactor LLDPE experiment

These experiments follow the same procedure as the HDPE experiments above except as noted below. A lower polymerization temperature typically 60-80 °C would be used to avoid reactor fouling. A larger volume of comonomer would be used typically 100-600 mls of either 1 butene or 1 hexene to produce the desired density. The amount of $H_2$ would be adjusted to produce the desired MI.

3. Cascade reactor simulation - general procedure

Simulated cascade reactor runs are used to allow targeting of either molecular weight (MI), long chain branching, and/or comonomer to produce a desired polymer. These runs are conducted in the same 1 gallon reactor described above.

Reactor conditions for the first stage of polymerization.

Add the ingredients as described for single reactor HDPE Experiments. However, the polymerization is run until 100 grams of polymer are made. The reactor pressure is then vented down to the vapor pressure of isobutane at the run temperature. The polymer and isobutane remain in the reactor.

Reactor conditions for the second stage of polymerization.

The new run conditions are inventoried as need, e.g. hexene, $H_2$, and ethylene. The run is typically run for 100 gram additional yield. The amount of polymer made under each set of conditions is controllable to make the desired polymer properties. No additional catalyst is added. Optionally, additional cocatalyst or promoter may be added.

4. Cascade reactor simulation - actual experiment

In these examples (2-4), a polymer is formed by simulating a cascade reactor. Specifically the comonomer is targeted to the high Mw side of the MWD. The examples explore a range of hexene utilized thus offering a range of density of the resin produced.

Reactor conditions for the first stage of polymerization.

The 1st stage is simulated by maintaining the reactor at a temperature of about 80 °C. Approximately, 0.169 grams of catalyst, 2 mls of 1.5M TEAL, and 3mls of 1.0M DBM were charged to the catalyst; cocatalyst, and modifier injectors respectively in the glove box. The injector was connected to the reactor. 1600 mls of isobutane diluent were added to the reactor. Next 7.0 kg/cm$^2$ (100 psi) delta P of H2 were added from the addition vessel. The reactor was brought up to temperature as the TEAL & DBM were injected to the reactor. The ethylene was added to give a final pressure of 22.9 kg/cm$^2$ (326 psi). The catalyst was injected and the run continued to produce about 100 grams of polymer. The reactor was then vented to 14.1 kg/cm$^2$ (200 psi) (vapor pressure of isobutane) to remove ethylene and $H_2$.

Reactor conditions for the second stage of polymerization.

The reactor was maintained at temperature and rapidly 10 ml of 1 hexene, 3.5 kg/cm$^2$ (50 psi) pressure drop of $H_2$ and ethylene to a final pressure of 22.9 kg/cm$^2$ (326 psi) were added. The run continued to produce about 100 grams of additional polymer. Upon completion of the run, the ethylene feed was stopped and the reactor was rapidly discharged to a dump vessel to remove the volatile gases.

The polymer was vacuum oven dried to remove residual hexene before further analysis. The material was stabilized with antioxidants and the MI & HLMI were measured by ASTM method D1238 with conditions of MI 190 °C 2.16 kG and HLMI 21.6 kg respectively. The results are MI= 0.21 and HLMI=76.

Table 1 provides reaction condition and ingredients for polyolefin composition made by the methods of the present invention. Table 2 provides samples made by the methods of the invention. Example 1 is a single reactor simulation showing the production of a higher melt index ("MI") material with significant LCBI. Examples 2-4 provides the run conditions for the cascade simulation.

Table 1. Reaction conditions.

| Example | Temperature (°C) | Total reactor pressure (ethylene included) kg/cm$^2$ (psi) | Stage 1 H$_2$ pressure kg/cm$^2$ (psi) | Stage 2 H$_2$ pressure kg/cm$^2$ (psi) | Stage 1 volume of 1-hexene (ml) | Stage 2 volume of 1-hexene (ml) |
|---|---|---|---|---|---|---|
| 1 | 100 | 31.6 (450) | 3.5 (50) | NA* | 0 | NA |
| 2 | 80 | 23.6 (335) | 7.0 (100) | 3.5 (50) | 0 | 10 |
| 3 | 80 | 23.6 (335) | 7.0 (100) | 3.5 (50) | 0 | 30 |
| 4 | 80 | 23.6 (335) | 7.0 (100) | 3.5 (50) | 0 | 50 |
| *NA means not applicable. | | | | | | |

Table 2. Polyolefin resin properties.

| Sample ID | Melt Index (g/10 min) | Melt Index Ratio | LCBI |
|---|---|---|---|
| 1 | 9.5 | - | >5 |
| 2 | 0.33 | 243 | 1.68 |
| 3 | 0.57 | 218 | 2.62 |
| 4 | 0.713 | 223 | 2.57 |

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

**Claims**

1.    A method of forming a polyolefin resin, the method comprising:

a) forming a reaction mixture at a sufficient temperature to allow formation of the polyolefin resin by combining molecular hydrogen, a first olefin selected from the group consisting of ethylene and C$_3$-C$_8$ $\alpha$-olefin, an optional second olefin selected from the group consisting of ethylene and C$_3$-C$_8$ $\alpha$-olefin, a diluent, and a vanadium-containing catalyst system that includes a modifier having formula I:

$$(R^1O)_xSiR^2{}_4\text{-x} \qquad I$$

wherein R$^1$ and R$^2$ are each independently alkyl and x is 1 to 3, wherein the modifier is added at any point during the formation of the polyolefin resin; and
b) initiating polymerization of the reaction mixture;

wherein the first olefin is different than the second olefin and the polyolefin resin has a density greater than 0.92, a melt index from 0.01 to 20, and a long chain branching index of greater than 1.

2.    The method of claim 1 wherein the catalyst system does not contain chromium.

3.    The method of claim 1 or 2 wherein the first olefin and the second olefin are each selected from the group consisting of ethylene, propylene, 1-butene, 1-pentene, 4-methyl-1-pentene, 1-hexene, 1-octene and mixtures thereof.

4. The method of any one of claim 1-3 wherein the molar ratio of the first olefin to the second olefin is from 0.001 to 1,000.

5. The method of any one of claim 1-4 wherein,
the first olefin is present in an amount of 0.2 mole °C to 20 mole % of the reaction mixture; and
the second olefin is present in an amount of 0.1 mole % to 30 mole% of the reaction mixture.

6. The method of any one of claim 1-5 wherein the molecular hydrogen is present in an amount of 0.00005 to 5%.

7. The method of any one of claim 1-6 wherein the vanadium-containing catalyst system comprises:

(A) a supported catalyst component prepared by the steps of

(i) preheating silica at a temperature in the range of between 150 °C and 800 °C;
(ii) contacting said preheated silica with a contacting agent selected from the group consisting of (1) a compound or complex which includes at least one carbon to magnesium covalent bond, (2) a compound which includes at least one carbon to a metal of Group III of the Periodic Table of the Elements covalent bond and (3) both a compound or complex which includes at least one carbon to magnesium covalent bond and a compound which includes at least one carbon to Group III metal covalent bond;
(iii) contacting said product of step (ii) with whichever of contacting agent (1) and (2) that does not contact said preheated silica in step (b), with the proviso that this step is omitted if said contacting agent (3) is employed in step (b);
(iv) contacting said product of step (ii) or (iii) with a vanadium compound which includes at least one halogen atom; and
(v) contacting said product of step (iv) with an alcohol;

(B) an organoaluminum compound cocatalyst; and
(C) a halogen-containing promoter compound having the structural formula $C_tH_sX^2_{2t+2-s}$ where $X^2$ is the same or different and is fluorine, chlorine or bromine; t is an integer of 1 to 3 and s is 0 or an integer of 1 to 7; and
b) initiating polymerization of the reaction mixture;

wherein the first olefin is different than the second olefin and the polyolefin resin has a density greater than 0.92, a melt index from 0.01 to 20, and a long chain branching index of greater than 1.

8. The method of claim 7 wherein,
the first olefin is present in an amount of 5 mole % to 15 mole % of the reaction mixture; and
the second olefin is present in an amount of 0.5 mole % to 5 mole% of the reaction mixture.

9. The method of claim 8 wherein the first olefin is ethylene, the second olefin is selected from the group consisting of propylene, 1-butene, 1-pentene, 4-methyl-1-pentene, 1-hexene, 1-octene, and mixtures thereof, and the polymer is a HDPE.

10. The method of claim 7 wherein,
the first olefin is present in an amount of 5 mole % to 15 mole % of the reaction mixture; and
the second olefin is present in an amount of 5 mole % to 30 mole% of the reaction mixture.

11. The method of claim 10 wherein the first olefin is ethylene, the second olefin is selected from the group consisting of propylene, 1-butene, 1-pentene, 4-methyl-1-pentene, 1-hexene, 1-octene, and mixtures thereof, and the polymer is a LLDPE.

12. The method of any one of claim 7-11 wherein the organoaluminum compound cocatalyst is $Al(Et)_3$ and the halogen containing promoter is $CH_2Br_2$.

13. The method of claim 11 wherein the modifier is a component selected from $(i\text{-propyl})_2Si(OMe)_2$, $(i\text{-butyl})_2Si(OMe)_2$, $Me_2Si(OMe)_2$, $(i\text{-butyl})Si(OMe)_3$, $(cyclohexyl)(Me)Si(OMe)_2$, and mixtures thereof.

**Patentansprüche**

1. Verfahren zur Bildung eines Polyolefinharzes, bei dem man:

   a) bei einer zur Bildung des Polyolefinharzes ausreichenden Temperatur eine Reaktionsmischung bildet, indem man molekularen Wasserstoff, ein erstes Olefin aus der Gruppe bestehend aus Ethylen und $C_3$-$C_8$-$\alpha$-Olefin, ein fakultatives zweites Olefin aus der Gruppe bestehend aus Ethylen und $C_3$-$C_8$-a-Olefin, ein Verdünnungsmittel und ein vanadiumhaltiges Katalysatorsystem, das ein Modifizierungsmittel der Formel I:

   $$(R^1O)_x SiR^2_{4-x} \qquad I$$

   worin $R^1$ und $R^2$ jeweils unabhängig voneinander für Alkyl stehen und x für 1 bis 3 steht,
   enthält, vereinigt, wobei das Modifizierungsmittel an einem beliebigen Punkt der Bildung des Polyolefinharzes zugegeben wird, und
   b) die Polymerisation der Reaktionsmischung initiiert,

   wobei das erste Olefin sich von dem zweiten Olefin unterscheidet und das Polyolefinharz eine Dichte von mehr als 0,92, einen Schmelzindex von 0,01 bis 20 und einen Langkettenverzweigungsindex von mehr als 1 aufweist.

2. Verfahren nach Anspruch 1, bei dem das Katalysatorsystem kein Chrom enthält.

3. Verfahren nach Anspruch 1 oder 2, bei dem man das erste Olefin und das zweite Olefin jeweils aus der Gruppe bestehend aus Ethylen, Propylen, 1-Buten, 1-Penten, 4-Methyl-1-penten, 1-Hexen, 1-Octen und Mischungen davon auswählt.

4. Verfahren nach einem der Ansprüchen 1-3, bei dem das Molverhältnis von erstem Olefin zu zweitem Olefin 0,001 bis 1,000 beträgt.

5. Verfahren nach einem der Ansprüche 1-4, bei dem
   das erste Olefin in einer Menge von 0,2 Mol- % bis 20 Mol-%, bezogen auf die Reaktionsmischung, vorliegt und
   das zweite Olefin in einer Menge von 0,1 Mol-% bis 30 Mol-%, bezogen auf die Reaktionsmischung, vorliegt.

6. Verfahren nach einem der Ansprüche 1-5, bei dem der molekulare Wasserstoff in einer Menge von 0,00005 bis 5% vorliegt.

7. Verfahren nach einem der Ansprüche 1-6, bei dem das vanadiumhaltige Katalysatorsystem:

   (A) eine geträgerte Katalysatorkomponente, hergestellt durch

   (i) Vorerhitzen von Siliciumdioxid auf eine Temperatur im Bereich zwischen 150°C und 800°C;
   (ii) Inberührungbringen des vorerhitzten Siliciumdioxids mit einem Kontaktierungsmittel aus der Gruppe bestehend aus (1) einer Verbindung oder einem Komplex, die bzw. der mindestens eine kovalente Bindung von Kohlenstoff zu Magnesium enthält, (2) einer Verbindung, die mindestens eine kovalente Bindung von Kohlenstoff zu einem Metall der Gruppe III des Periodensystems der Elemente enthält, und (3) sowohl einer Verbindung oder einem Komplex, die bzw. der mindestens eine kovalente Bindung von Kohlenstoff zu Magnesium enthält, als auch einer Verbindung, die mindestens eine kovalente Bindung von Kohlenstoff zu einem Metall der Gruppe III des Periodensystems der Elemente enthält;
   (iii) Inberührungbringen des Produkts aus Schritt (ii) mit demjenigen Kontaktierungsmittel (1) bzw. (2), das in Schritt (b) nicht mit dem vorerhitzten Siliciumdioxid in Berührung gebracht wird, mit der Maßgabe, daß dieser Schritt weggelassen wird, wenn in Schritt (b) das Kontaktierungsmittel (3) eingesetzt wird;
   (iv) Inberührungbringen des Produkts aus Schritt (ii) bzw. (iii) mit einer Vanadiumverbindung, die mindestens ein Halogenatom enthält; und
   (v) Inberührungbringen des Produkts aus Schritt (iv) mit einem Alkohol;

   (B) eine Organoaluminiumverbindung als Cokatalysator und
   (C) eine halogenhaltige Promotorverbindung mit der Strukturformel $C_t H_s X^2_{2t+2-s}$, wobei $X^2$ gleich oder verschieden ist und für Fluor, Chlor oder Brom steht; t für eine ganze Zahl von 1 bis 3 steht und s für 0 oder eine ganze Zahl von 1 bis 7 steht;

umfaßt; und

b) die Polymerisation der Reaktionsmischung initiiert,

wobei das erste Olefin sich von dem zweiten Olefin unterscheidet und das Polyolefinharz eine Dichte von mehr als 0,92, einen Schmelzindex von 0,01 bis 20 und einen Langkettenverzweigungsindex von mehr als 1 aufweist.

**8.** Verfahren nach Anspruch 7, bei dem
das erste Olefin in einer Menge von 5 Mol-% bis 15 Mol-%, bezogen auf die Reaktionsmischung, vorliegt und
das zweite Olefin in einer Menge von 0,5 Mol-% bis 5 Mol-%, bezogen auf die Reaktionsmischung, vorliegt.

**9.** Verfahren nach Anspruch 8, bei dem es sich bei dem ersten Olefin um Ethylen handelt, man das zweite Olefin aus der Gruppe bestehend aus Propylen, 1-Buten, 1-Penten, 4-Methyl-1-penten, 1-Hexen, 1-Octen und Mischungen davon auswählt und es sich bei dem Polymer um ein HDPE handelt.

**10.** Verfahren nach Anspruch 7, bei dem
das erste Olefin in einer Menge von 5 Mol-% bis 15 Mol-%, bezogen auf die Reaktionsmischung, vorliegt und
das zweite Olefin in einer Menge von 5 Mol-% bis 30 Mol-%, bezogen auf die Reaktionsmischung, vorliegt.

**11.** Verfahren nach Anspruch 10, bei dem es sich bei dem ersten Olefin um Ethylen handelt, man das zweite Olefin aus der Gruppe bestehend aus Propylen, 1-Buten, 1-Penten, 4-Methyl-1-penten, 1-Hexen, 1-Octen und Mischungen davon auswählt und es sich bei dem Polymer um ein LLDPE handelt.

**12.** Verfahren nach einem der Ansprüche 7-11, bei dem es sich bei der als Cokatalysator dienenden Organoaluminiumverbindung um $Al(Et)_3$ handelt und es sich bei dem halogenhaltigen Promotor um $CH_2Br_2$ handelt.

**13.** Verfahren nach Anspruch 11, bei dem es sich bei dem Modifizierungsmittel um eine unter $(Isopropyl)_2Si(OMe_2)$, $(Isobutyl)_2Si(OMe_2)$, $Me_2Si(OMe)_2$, $(Isobutyl)Si(OMe_3)$, $(Cyclohexyl)(Me)Si(OMe)_2$ und Mischungen davon ausgewählte Komponente handelt.

**Revendications**

**1.** Procédé de formation d'une résine de polyoléfine, le procédé comprenant :

a) la formation d'un mélange réactionnel à une température suffisante pour permettre la formation de la résine de polyoléfine en combinant de l'hydrogène moléculaire, une première oléfine choisie dans le groupe consistant en l'éthylène et une $C_3$-$C_8$ $\alpha$-oléfine, une seconde oléfine optionnelle choisie dans le groupe consistant en l'éthylène et une $C_3$-$C_8$ $\alpha$-oléfine, un diluant et un système de catalyseur contenant du vanadium qui inclut un modificateur ayant la formule I :

$$(R^1O)_xSiR^2_{4-x} \qquad I$$

où $R^1$ et $R^2$ sont chacun indépendamment alkyle et x est 1 à 3, où le modificateur est ajouté à un point quelconque pendant la formation de la résine de polyoléfine ; et
b) l'initiation de la polymérisation du mélange réactionnel ;

où la première oléfine est différente de la seconde oléfine et la résine de polyoléfine a une densité supérieure à 0,92, un indice de fluidité de 0,01 à 20 et un indice de ramification à longue chaîne supérieur à 1.

**2.** Procédé selon la revendication 1 où le système de catalyseur ne contient pas de chrome.

**3.** Procédé selon la revendication 1 ou 2 où la première oléfine et la seconde oléfine sont choisies chacune dans le groupe consistant en l'éthylène, le propylène, le 1-butène, le 1-pentène, le 4-méthyl-1-pentène, le 1-hexène, le 1-octène et leurs mélanges.

**4.** Procédé selon l'une quelconque des revendications 1-3 où le rapport molaire de la première oléfine à la seconde oléfine est de 0,001 à 1000.

**5.** Procédé selon l'une quelconque des revendications 1-4 où
la première oléfine est présente en une quantité de 0,2 mol% à 20 mol% du mélange réactionnel ; et
la seconde oléfine est présente en une quantité de 0,1 mol% à 30 mol% du mélange réactionnel.

**6.** Procédé selon l'une quelconque des revendications 1-5 où l'hydrogène moléculaire est présent en une quantité de 0,00005 à 5 %.

**7.** Procédé selon l'une quelconque des revendications 1-6 où le système de catalyseur contenant du vanadium comprend :

(A) un composant de catalyseur supporté préparé par les étapes de

(i) préchauffer de la silice à une température dans la plage entre 150°C et 800°C ;
(ii) mettre en contact ladite silice préchauffée avec un agent de mise en contact choisi dans le groupe consistant en (1) un composé ou complexe qui inclut au moins une liaison covalente du carbone au magnésium, (2) un composé qui inclut au moins une liaison covalent du carbone à un métal du groupe III du tableau périodique des éléments et (3) un composé ou complexe qui inclut au moins une liaison covalente du carbone au magnésium et un composé qui inclut au moins une liaison covalents du carbone à un métal du groupe III ;
(iii) mettre en contact ledit produit de l'étape (ii) avec celui des agents de mise en contact (1) et (2) qui n'est pas en contact avec ladite silice préchauffée dans l'étape (b), avec la condition que cette étape est omise si ledit agent de mise en contact (3) est employé dans l'étape (b) ;
(iv) mettre en contact ledit produit de l'étape (ii) ou (iii) avec un composé du vanadium qui inclut au moins un atome d'halogène ; et
(v) mettre en contact ledit produit de l'étape (iv) avec un alcool ;

(B) un cocatalyseur composé d'organoaluminium ; et
(C) un composé promoteur halogéné ayant la formule structurale $C_tH_sX^2_{2t+2-s}$ où $X^2$ est identique ou différent et est le fluor, le chlore ou le brome ; t est un entier de 1 à 3 et s est 0 ou un entier de 1 à 7 ; et

b) initier la polymérisation du mélange réactionnel ;
où la première oléfine est différente de la seconde oléfine et la résine de polyoléfine a une densité supérieure à 0,92, un indice de fluidité de 0,01 à 20 et un indice de ramification à longue chaîne supérieur à 1.

**8.** Procédé selon la revendication 7 où
la première oléfine est présente en une quantité de 5 mol% à 15 mol% du mélange réactionnel ; et
la seconde oléfine est présente en une quantité de 0,5 mol% à 5 mol% du mélange réactionnel.

**9.** Procédé selon la revendication 8 où la première oléfine est l'éthylène, la seconde oléfine est choisie dans le groupe consistant en le propylène, le 1-butène, le 1-pentène, le 4-méthyl-1-pentène, le 1-hexène, le 1-octène et leurs mélanges, et le polymère est un HDPE.

**10.** Procédé selon la revendication 7 où
la première oléfine est présente en une quantité de 5 mol% à 15 mol% du mélange réactionnel ; et
la seconde oléfine est présente en une quantité de 5 mol% à 30 mol% du mélange réactionnel.

**11.** Procédé selon la revendication 10 où la première oléfine est l'éthylène, la seconde oléfine est choisie dans le groupe consistant en le propylène, le 1-butène, le 1-pentène, le 4-méthyl-1-pentène, le 1-hexène, le 1-octène et leurs mélanges, et le polymère est un LLDPE.

**12.** Procédé selon l'une quelconque des revendications 7-11 où le cocatalyseur composé d'organoaluminium est Al(Et)$_3$ et le promoteur halogéné est $CH_2Br_2$.

**13.** Procédé selon la revendication 11 où le modificateur est un composant choisi parmi ($i$-propyl)$_2$Si(OMe)$_2$, ($i$-butyl)$_2$Si(OMe)$_2$, Me$_2$Si(OMe)$_2$, ($i$-butyl)Si(OMe)$_3$, (cyclohexyl)(Me)Si(OMe)$_2$ et leurs mélanges.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5534472 A

**Non-patent literature cited in the description**

- **R.N. SHROFF ; H. MAVRIDIS.** Long-Chain-Branching Index for Essentially Linear Polyethylenes. *Marcomolecules,* 1999, vol. 32 (25), 8454-8464